# EUROPÄISCHE PATENTSCHRIFT

(11) **EP 1 080 830 B1**
(45) Veröffentlichungstag und Bekanntmachung des Hinweises auf die Patenterteilung: **10.12.2003**
(21) Anmeldenummer: 99117530.8
(22) Anmeldetag: 04.09.1999
(51) Int. Cl.: B23Q 3/10, B23Q 16/00, B23Q 1/62

(54) **Vorrichtung zur Feineinstellung von Anschlägen**
Device for the fine adjustment of stops
Dispositif pour l'ajustement précis de butées

(43) Veröffentlichungstag der Anmeldung: 07.03.2001
(73) Patentinhaber: Horst Witte Entwicklungs- und Vertriebs-KG, 21369 Nahrendorf (DE)
(72) Erfinder: Witte, Andreas, 21534 Bleckede (DE)
(74) Vertreter: von Raffay, Vincenz, Dipl.-Ing.

(56) Entgegenhaltungen:
- EP-A- 0 558 877
- EP-A- 0 803 322
- US-A- 3 998 127
- US-A- 4 752 160

## Beschreibung

Die Erfindung betrifft eine Vorrichtung nach dem Oberbegriff des Anspruches 1.

Eine derartige Vorrichtung ist aus der EP 0 803 322 A1 bekannt.

Diese Vorrichtungen kommen beispielsweise zum Einsatz an Systemen, wie sie aus der EP 0 222 147 B1 bekannt sind.

Die aus der EP 0 803 322 bekannte Vorrichtung ermöglicht bereits eine Feineinstellung in Achsrichtung und in zwei senkrechten Richtungen zu dieser Achsrichtung, d.h. in x-, y- und z-Ebene.

Der Erfindung liegt nun die Aufgabe zugrunde, eine Vorrichtung nach dem Oberbegriff des Anspruches 1 zu schaffen, die eine weitere Feineinstellung mit zusätzlichen Freiheitsgraden ermöglicht.

Diese Aufgabe wird grundsätzlich durch das Kennzeichen des Anspruches 1 gelöst.

Die Vorrichtung nach der Erfindung ist nicht nur in sämtlichen drei Achsrichtungen, d.h. in x-, y- und z-Achse verstellbar, sondern es ist auch noch eine Schwenkbewegung um die x-Achse und hiervon unabhängige Schwenkbewegung um die y-Achse möglich. Hierdurch werden weitere Freiheitsgrade geschaffen, und die Feineinstellung ist noch universeller.

Die Erfindung ist vielseitig einsetzbar und nicht auf die Verwendung in Verbindung mit Mess- und Werkzeugmaschinen beschränkt.

Zusätzlich zu der Verstellmöglichkeit des Oberteils in Richtung der Mittelachse ist dieses in vorteilhafter Weise um diese Mittelachse drehbar oder schwenkbar, wie es Gegenstand des Anspruches 3 ist.

In den Ansprüchen 2 und 4 bis 10 sind vorteilhafte Ausgestaltungen der Vorrichtung nach der Erfindung unter Schutz gestellt.

Im folgenden wird die Erfindung unter Hinweis auf die Zeichnung anhand eines Ausführungsbeispieles näher erläutert.

Es zeigt:
- Fig.1: eine perspektivische Ansicht einer Ausführungsform der Vorrichtung nach der Erfindung;
- Fig. 2: eine Seitenansicht von der einen Seite der Vorrichtung nach Fig. 1;
- Fig. 3: eine gegenüber Fig. 2 um 90° gedrehte Seitenansicht der Vorrichtung nach Fig. 1;
- Fig. 4: eine Draufsicht auf die Darstellung der Fig. 1, 2 und 3;
- Fig. 5: einen Schnitt gemäss der Linie V-V der Fig. 2;
- Fig. 6: einen Schnitt gemäss der Linie VI-VI der Fig. 3; und

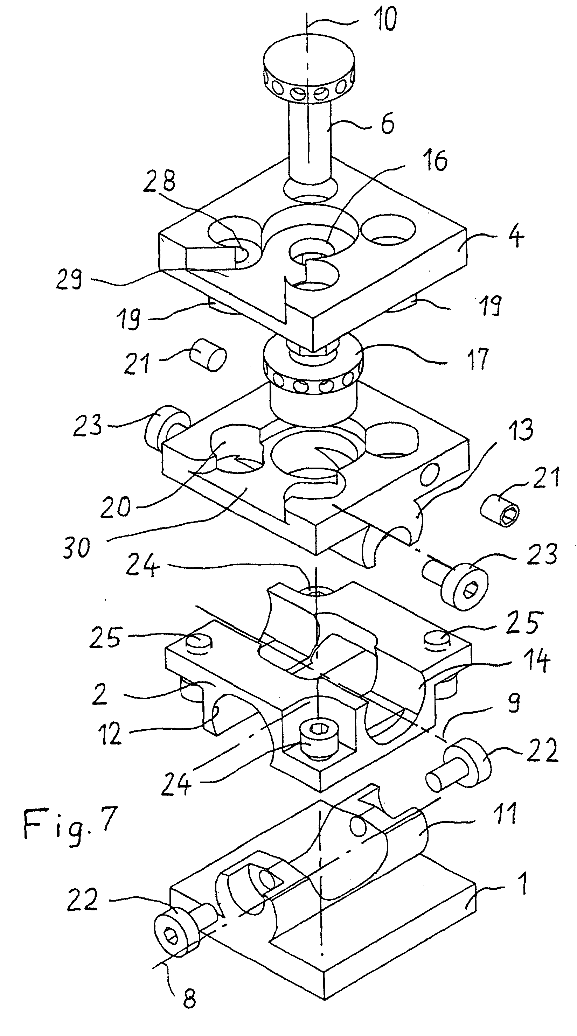

- Fig. 7: eine explosionsartig auseinandergezogene perspektivische Darstellung der in den Fig. 1 bis 6 dargestellten Vorrichtung.

Die in der Zeichnung dargestellte Vorrichtung besteht aus vier Hauptbauteilen, einem Unterteil 1, einem darüber angeordneten Kreuzteil 2, einem wiederum über dem Kreuzteil angeordneten Mittelteil 3 und einem Oberteil 4.

Ebenso, wie bei der Vorrichtung nach der EP 0 803 322 A1 ist das Kreuzteil quer zum Unterteil verstellbar, das Mittelteil senkrecht hierzu quer zum Kreuzteil und das Oberteil in Richtung der Mittelachse, so daß eine Verstellung in den drei Achsen x, y und z möglich ist. Im einzelnen sind die vier Teile anders ausgeführt.

Das Unterteil 1 weist eine Art Feder 11 mit kreisförmigem Querschnitt auf, die von einer Nut 12 in dem Kreuzteil 2 aufgenommen wird. In Richtung der Achse 8 dieser Nut- und Federverbindung ist eine Verstellung in der x-Achse möglich.

Das Kreuzteil weist eine quer zur Nut 12 verlaufende Nut 14 auf, von der eine Feder 13 in dem Mittelteil aufgenommen wird, um die Verstellung in der y-Achse zu ermöglichen. Auch diese Nut- und Federverbindung 13,14 weist einen kreisförmigen Querschnitt auf. Die Achse, die praktisch die y-Achse bildet, ist mit 9 bezeichnet. Auf ihr liegt auch der Mittelpunkt des Kreises des kreisförmigen Querschnittes der Nutund Federverbindung 13,14.

Die Verstellung in die beiden Achsrichtungen erfolgt mit Hilfe von Verstellschrauben 22 und 23, die entsprechend in das Unterteil und das Mittelteil eingeschraubt sind. Die Verstellschrauben 22 liegen einander gegenüber auf einer gemeinsamen Achse, die aber nicht mit der Verstellachse 8 zusammenfällt, sondern über dieser Verstellachse 8 liegt.

Ebenso liegen die Verstellschrauben 23 einander gegenüber auf einer gemeinsamen Achse, die aber nicht mit der Verstellachse 9 zusammenfällt, sondern unterhalb dieser Verstellachse 9 liegt.

Bedingt durch den kreisförmigen Querschnitt der Nut- und Federverbindungen 11,12 und 13,14 ist um die jeweilige Verstellachse 8 oder 9 zusätzlich eine Schwenkbewegung in einem beschränkten Winkel möglich. Das Kreuzteil 2 ist also nicht nur in Richtung der Verstellachse 8 verstellbar, sondern auch um diese schwenkbar. Entsprechend ist das Mittelteil 3 in Richtung der Achse 9 verstellbar und um diese Verstellachse schwenkbar.

Die Schwenkbewegung wird durchgeführt und gleichzeitig begrenzt durch Schwenkschrauben 24 und 25, die in das Kreuzteil eingeschraubt sind. Die einander diagonal gegenüberliegenden Schwenkschrauben 24 führen die Schwenkbewegung um die Verstellachse 8 und die einander auf einer senkrechten Linie hierzu gegenüberliegenden Schwenkschrauben 25 führen die Schwenkbewegung um die Verstellachse 9 durch. Gleichzeitig können diese Schrauben entsprechend angezogen werden, um die eingestellte Position festzuhalten und zu sichern. Entsprechendes gilt für die Verstellschrauben 22 und 23 für die Verstellung und Arretierung in Richtung der Verstellachsen 8 und 9.

Das Oberteil 4 ist an dem Mittelteil 3 durch eine Spannschraube 6 befestigt, die in Richtung der Mittelachse 10 in das Mittelteil 3 in ein Gewinde 15 eingeschraubt ist. Zentrisch um diese Spannschraube 6 herum ist ein Gewindering 17 angeordnet, der in Gewinde 18 in dem Mittelteil 3 eingeschraubt ist.

Der Kopf der Spannschraube 6 weist Bohrungen 26 zur Aufnahme eines Werkzeuges auf, um die Spannschraube zu lösen und festzuziehen. Eine Aussparung 29 in dem Oberteil ermöglicht die Zugänglichkeit des Werkzeuges zu den Bohrungen 26. Entsprechend sind Bohrungen 27 in dem Gewindering 17 vorgesehen. Diese Bohrungen 27 sind durch eine Aussparung 30 in dem Mittelteil 3 zugänglich.

Wenn die Spannschraube 6 gelöst ist, kann durch Drehung des Gewinderinges 17 das Oberteil 4 auf- und abbewegt werden. Wenn die gewünschte Position in Richtung der z-Achse eingenommen ist, dann wird die Spannschraube 6 wieder festgezogen.

Zusätzlich kann das Oberteil 4 noch in der Ebene senkrecht zu der Mittelachse 10, d.h. um diese Mittelachse 10 herum, verstellt, d.h. verdreht werden. Zu diesem Zweck sind Führungszapfen 19 an der Unterseite des Oberteils 4 vorgesehen, die in Langlöcher 20 eingreifen. Diese Langlöcher sind so angeordnet und dimensioniert, dass eine beschränkte Schwenkbewegung um die Mittelachse möglich ist, wenn die Spannschraube 6 gelöst ist. Das Oberteil ist also nicht nur in Richtung der z-Achse verstellbar, sondern auch um diese schwenkbar. Die Schwenkbewegung senkrecht zur z-Achse wird mit Hilfe von Sicherungsschrauben 21 in dem Mittelteil 3 durchgeführt, und wenn die gewünschte Position eingenommen ist, sorgen diese einander gegenüberliegenden Sicherungsschrauben 21 für eine entsprechende Arretierung. Die Sicherungsschrauben gehen bis in das entsprechende Langloch 20 und gelangen an dem zugeordneten Führungszapfen 19 zur Anlage.

Zugänglich von der Oberseite des Oberteils 4 sind Befestigungsbohrungen 28 vorgesehen, um ein entsprechendes Werkstück zu befestigen.

Entsprechend sind auf der Unterseite des Unterteils 1 Vorsprünge 31 vorgesehen, um dieses Unterteil an einer entsprechenden Spannvorrichtung oder dgl. zu befestigen.

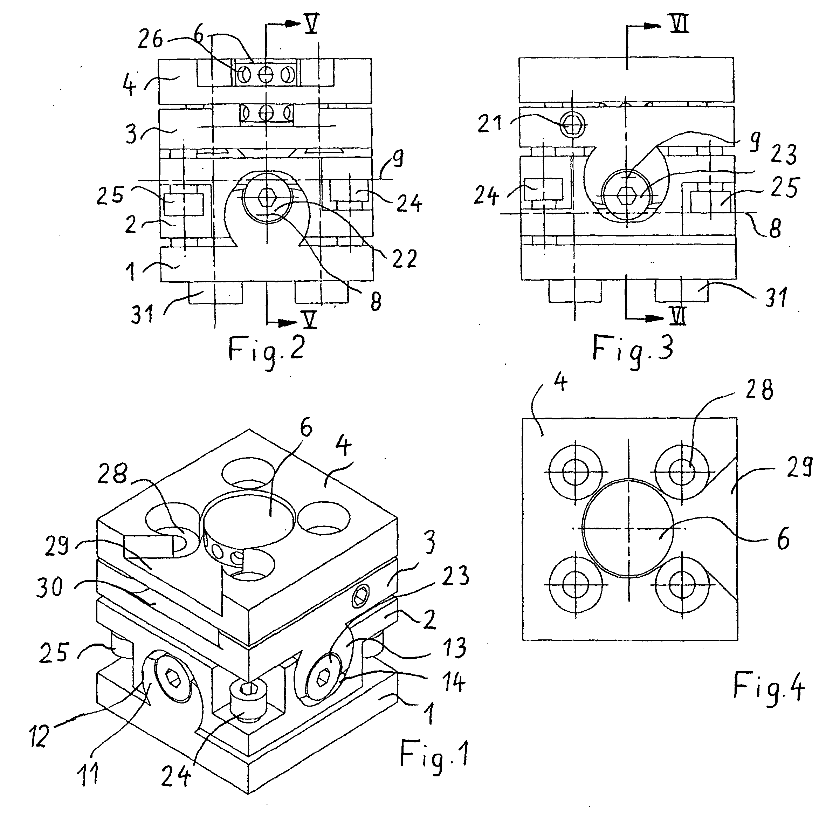

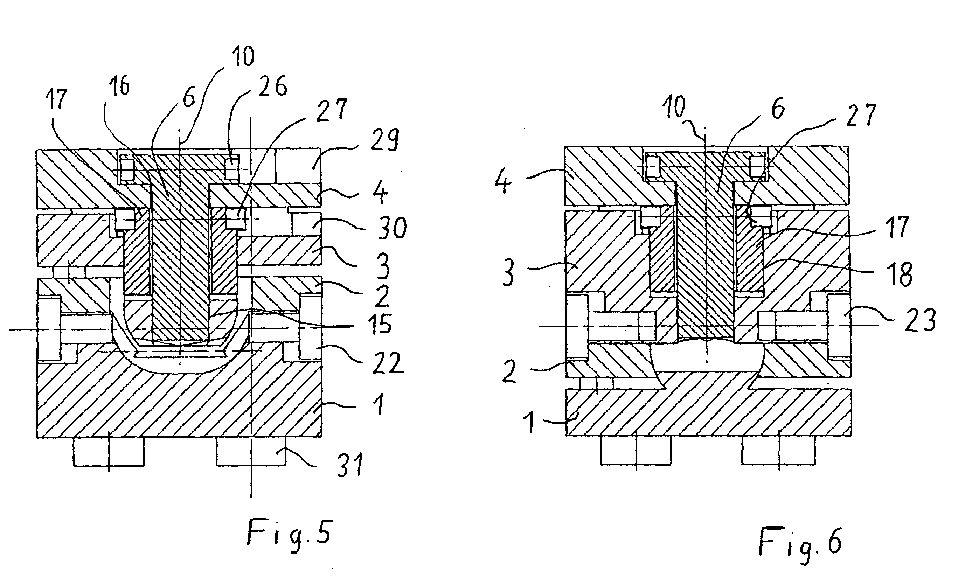

Es sind folgende Verstellmöglichkeiten bei der Vorrichtung, so wie sie in den Fig. 1 bis 6 dargestellt ist, vorhanden.
1. Querverstellung des Kreuzteils zu dem Unterteil in Richtung der Verstellachse 8.
2. Querverstellung des Mittelteils senkrecht hierzu in Richtung der Verstellachse 9.
3. Schwenkbewegung des Kreuzteils um die Verstellachse 8.
4. Schwenkbewegung des Mittelteils um die Verstellachse 9.
5. Verstellung des Oberteils 4 in Richtung der Mittelachse 10.
6. Schwenk- oder Drehbewegung des Oberteils 4 um die Mittelachse 10.

Es ist also nicht nur eine Verstellung in Richtung der x-, y-, und z-Achse möglich, sondern es sind jeweils auch Schwenkbewegungen um diese drei Achsen möglich.

## Patentansprüche

1. Vorrichtung zur Feineinstellung von Anschlägen, Aufnahmebolzen, Konturpassstücken oder dgl., an Spannvorrichtungen, insbesondere für Mess- und Werkzeugmaschinen, mit
einem Unterteil (1) zur Befestigung an der Spannvorrichtung,
einem an dem Unterteil befestigten Kreuzteil (2), das quer zu dem Unterteil verstellbar ist,
einem an dem Kreuzteil (2) befestigten Mittelteil (3), das quer zu dem Kreuzteil (2) und senkrecht zu der Verstellrichtung des Kreuzteiles verstellbar ist, und
einem Oberteil (4) für das aufzuspannende Werkstück, das (Oberteil) in der Mittelachse (10) senkrecht zu den Verstellachsen (8,9) des Kreuzteils (2) und des Mittelteils (3) verstellbar ist,
**dadurch gekennzeichnet, dass** das Kreuzteil (2) um die Achse (8) schwenkbar ist, auf der es quer zum Unterteil (1) verstellbar ist, und
dass das Mittelteil (3) um die Achse (9) schwenkbar ist, auf der es quer zum Kreuzteil (2) verstellbar ist.

2. Vorrichtung nach Anspruch 1, **dadurch gekennzeichnet, dass** die Axial- und die Schwenkbewegung des Mittelteils (3) und des Kreuzteils (2) durch Nut- und Federführungen (11 bis 14) mit kreisförmigem Querschnitt erfolgt, wobei der Mittelpunkt der entsprechenden Kreise auf der zugehörigen Verstell- und Schwenkachse (8 oder 9) liegt.

3. Vorrichtung nach Anspruch 1 oder 2, **dadurch gekennzeichnet, dass** das Oberteil (4) um die Mittelachse (10) in der Ebene senkrecht zu dieser drehbar ist.

4. Vorrichtung nach einem oder mehreren der Ansprüche 1 bis 3, **dadurch gekennzeichnet, dass** für das Oberteil (4) eine Spannschraube (6) vorgesehen ist, die durch eine Bohrung (16) in dem Oberteil (4) hindurchgeht und in eine Gewindebohrung (15) in dem Mittelteil (3) eingeschraubt ist.

5. Vorrichtung nach Anspruch 4, **dadurch gekennzeichnet, dass** zur Verstellung des Oberteils (4) in Achsrichtung (Mittelachse 10) der Spannschraube (6) zwischen Mittelteil (3) und Oberteil (4) ein Gewindering (17) angeordnet ist, der in einem Gewinde (18) in dem Mittelteil (3) eingeschraubt ist, das zentrisch zu der Spannschraube (6) liegt.

6. Vorrichtung nach einem oder mehreren der vorstehenden Ansprüche, **dadurch gekennzeichnet, dass** zwischen Oberteil (4) und Mittelteil (3) Führungszapfen (19) vorgesehen sind, die in radial zu der Mittelachse (10) ausgebildeten Langlöchern (20) in dem Mittelteil (3) geführt sind, und die durch Sicherungsschrauben (21) in dem Mittelteil (3) arretierbar sind.

7. Vorrichtung nach einem oder mehreren der vorstehenden Ansprüche, **dadurch gekennzeichnet, dass** parallel zu der Schwenk- und Verstellachse (9) zwischen Mittelteil (3) und Kreuzteil (2) einander gegenüberliegende Verstellschrauben (23) vorgesehen sind.

8. Vorrichtung nach einem oder mehreren der vorstehenden Ansprüche, **dadurch gekennzeichnet, dass** parallel zu der Schwenk- und Verstellachse (8) zwischen Kreuzteil (2) und Unterteil (1) einander gegenüberliegende Verstellschrauben (22) vorgesehen sind.

9. Vorrichtung nach einem oder mehreren der vorstehenden Ansprüche, **dadurch gekennzeichnet, dass** zwischen Mittelteil (3) und Kreuzteil (2) in Richtung der Mittelachse (10) verlaufende Schwenkschrauben (24) vorgesehen sind.

10. Vorrichtung nach einem oder mehreren der vorstehenden Ansprüche, **dadurch gekennzeichnet, dass** zwischen Kreuzteil (2) und Unterteil (1) in Richtung der Mittelachse (10) verlaufende Schwenkschrauben (25) vorgesehen sind.

## Claims

1. Device for the fine setting of stops, locating pins, contour fitting parts, etc. to clamping fixtures, particularly for measuring machines and machine tools having a lower part (1) for fixing to the clamping device, a crosspiece (2) fixed to the lower part and adjustable transversely to the lower part, a mid-section (3) fixed to the crosspiece (2) adjustable transversely to said crosspiece (2) and perpendicular to the adjustment direction of the crosspiece and an upper part (4) for the workpiece to be clamped, said upper part being adjustable in the centre axis (10) perpendicular to the adjusting axes (8, 9) of the crosspiece (2) and mid-section (3), **characterized in that** the crosspiece (2) is swivellable about the axis (8) on which it is adjustable transversely to the lower part and that the mid-section (3) is swivellable about the axis (9) on which it is adjustable transversely to the crosspiece (2).

2. Device according to claim 1, **characterized in that** the axial and swivelling movement of the mid-section (3) and crosspiece (2) takes place through groove and tongue guides (11 to 14) having a circular cross-section, the centre of the corresponding circles being located on the associated adjusting and swivelling axis (8 or 9).

3. Device according to claim 1 or 2, **characterized in that** the upper part (4) is rotatable about the centre axis (10) in the plane perpendicular thereto.

4. Device according to one or more of the claims 1 to 3, **characterized in that** for the upper part (4) is provided a tightening screw (6), which passes through a hole (16) in the upper part (4) and is screwed into the tapped hole (15) in the mid-section (3).

5. Device according to claim 4, **characterized in that** for adjusting the upper part (4) in the axial direction (centre axis 10) of the tightening screw (6) a ring nut (17) is positioned between the mid-section (3) and upper part (4) and screwed into a thread (18) in the mid-section (3), which is concentric to the tightening screw (6).

6. Device according to one or more of the preceding claims, **characterized in that** the upper part (4) and mid-section (3) are provided guide pins (19), which are guided in elongated slots (20) in the mid-section (3) constructed radially to the centre axis (10) and which can be locked in the mid-section (3) by locking screws (21).

7. Device according to one or more of the preceding claims, **characterized in that** facing adjusting screws (23) are provided between mid-section (3) and crosspiece (2) parallel to the swivelling and adjusting axis (9).

8. Device according to one or more of the preceding claims, **characterized in that** facing adjusting screws (22) are provided between crosspiece (2) and lower part (1) parallel to the swivelling and adjusting axis (8).

9. Device according to one or more of the preceding claims, **characterized in that** swivel screws (24) running in the direction of the centre axis (10) are provided between the mid-section (3) and crosspiece (2).

10. Device according to one or more of the preceding claims, **characterized in that** swivel screws (25) running in the direction of the centre axis (10) are provided between the crosspiece (2) and lower part (1).

## Revendications

1. Dispositif pour le réglage minutieux de butées, de boulons de fixation, de pièces ajustées au contour ou du même genre, sur des dispositifs de serrage, en particulier pour des machines à mesurer et des machines-outils, avec une partie inférieure (1) pour la fixation sur le dispositif de serrage, une partie en croix (2) fixée sur ladite partie inférieure, qui est réglable dans la diagonale de la partie inférieure, une partie centrale (3) fixée à la partie en croix (2), qui est réglable dans la diagonale de la partie en croix (2) et perpendiculairement au sens de réglage, et une partie supérieure (4) pour la pièce usinée à serrer, qui (la partie supérieure) est réglable dans l'axe central (10) perpendiculairement à l'axe de réglage (8, 9) de la partie en croix (2) et de la partie centrale (3), **caractérisé en ce que** la partie en croix (2) peut pivoter autour de l'axe (8) sur lequel elle est réglable dans la diagonale de la partie inférieure (1), et que la partie centrale (3) peut pivoter autour de l'axe (9), sur lequel elle est réglable dans la diagonale de la partie en croix (2).

2. Dispositif selon la revendication 1, **caractérisé en ce que** le mouvement axial et le mouvement pivotant de la partie centrale (3) et de la partie en croix (2) se fait par guidages à encoche et ressort (11 à 14) avec section transversale circulaire, le centre des cercles correspondants se trouvant sur l'axe de réglage et de pivotement (8 ou 9) correspondant.

3. Dispositif selon la revendication 1 ou 2, **caractérisé en ce que** la partie supérieure (4) peut pivoter autour de l'axe central (10) dans le plan perpendiculaire à celui-ci.

4. Dispositif selon l'une ou plusieurs des revendications 1 à 3, **caractérisé en ce qu'**une vis de serrage (6) est prévue pour la partie supérieure (4), qui passe par un alésage (16) dans la partie supérieure (4) et est vissée dans un alésage fileté (15) dans la partie centrale (3).

5. Dispositif selon la revendication 4, **caractérisé en ce qu'**une bague filetée (17) est disposée pour le réglage de la partie supérieure (4) dans le sens de l'axe (axe central 10) de la vis de serrage (6) entre la partie centrale (3) et la partie supérieure (4), ladite bague étant vissée dans un filetage (18) de la partie centrale (3), qui est centrée par rapport à la vis de serrage (6).

6. Dispositif selon l'une ou plusieurs des revendications précédentes, **caractérisé en ce que** des pivots de guidage (19) sont prévus entre la partie supérieure (4) et la partie centrale (3), lesdits pivots étant insérés dans des trous allongés (20) réalisés de manière radiale par rapport à l'axe central (10) dans la partie centrale (3), et étant blocables par des vis de retenue (21) dans la partie centrale (3).

7. Dispositif selon l'une ou plusieurs des revendications précédentes, **caractérisé en ce que** des vis de réglage (23) sont prévues les unes en face des autres parallèlement à l'axe de pivotement et de réglage (9) entre la partie centrale (3) et la partie en croix (2).

8. Dispositif selon l'une ou plusieurs des revendications précédentes, **caractérisé en ce que** des vis de réglage (22) sont prévues les unes en face des autres parallèlement à l'axe de pivotement et de réglage (8) entre la partie en croix (2) et la partie inférieure (1).

9. Dispositif selon l'une ou plusieurs des revendications précédentes, **caractérisé en ce que** des vis de pivotement (24) passant entre la partie centrale (3) et la partie en croix (2) dans le sens de l'axe central (10) sont prévues.

10. Dispositif selon l'une ou plusieurs des revendications précédentes, **caractérisé en ce que** des vis de pivotement (25) passant entre la partie en croix (2) la partie inférieure (1) dans le sens de l'axe central (10) sont prévues.
